# EUROPEAN PATENT APPLICATION

(11) **EP 4 725 562 A1**
(43) Date of publication of application: **15.04.2026**
(21) Application number: 25196443.3
(22) Date of filing: 18.08.2025
(51) Int. Cl.: A62C 3/16, A62C 35/10

(54) **FIRE EXTINGUISHING AGENT STRUCTURE AND SECONDARY BATTERY INCLUDING THE SAME**

(30) Priority: 08.10.2024 KR 20240136707
(71) Applicant: SAMSUNG SDI CO., LTD., Yongin-si, Gyeonggi-do 17084 (KR)
(72) Inventor: LEE, Sang Hyo, 16678 Suwon-si, Gyeonggi-do (KR)
(74) Representative: Gulde & Partner

(57) **Abstract**

The present disclosure relates to a secondary battery, and the technical problem to be solved is to provide a secondary battery that can secure current interruption performance due to high current and reduce cell resistance. To this end, the present disclosure provides a secondary battery including a fire extinguishing agent structure that includes a disk-shaped member; and a stick-shaped member vertically connected to the disk-shaped member, wherein the stick-shaped member and the disk-shaped member include a fire extinguishing agent that causes an endothermic reaction at a temperature of 100 °C or higher.

## Description

### BACKGROUND

### 1. Field of the Invention

The present invention relates to a fire extinguishing agent structure and a secondary battery including the same.

### 2. Discussion of Related Art

Recently, with the rapid spread of electronic devices that use batteries, such as cellular phones, laptop computers and electric vehicles, the demand for secondary batteries with high energy density and high capacity is rapidly increasing. Accordingly, research and development to improve the performance of lithium secondary batteries is actively underway.

A lithium secondary battery is a battery including a positive electrode and a negative electrode, which contain active materials capable of intercalation and deintercalation of lithium ions, and an electrolyte, and generates electrical energy through oxidation and reduction reactions when lithium ions are intercalated/deintercalated into/from the positive electrode and the negative electrode.

The information disclosed in the description of the related art of the present invention is only for improving the understanding of the background of the present invention, and thus may include information that does not constitute the related art.

### SUMMARY OF THE INVENTION

The invention is defined by the appended claims. The description that follows is subjected to this limitation. Any disclosure lying outside the scope of said claims is only intended for illustrative as well as comparative purposes.

The present invention is directed to providing a fire extinguishing agent structure which improves stability by preventing thermal runaway at high temperatures and a secondary battery including the same.

However, the technical problems to be solved by the present invention are not limited to the above-described problem, and other problems not mentioned can be clearly understood by those skilled in the art from the following description of the invention.

In order to overcome the above-described technical problems, a fire extinguishing agent structure according to the present invention includes a disk-shaped member; and a stick-shaped member vertically connected to the disk-shaped member, wherein the stick-shaped member and the disk-shaped member include a fire extinguishing agent that causes an endothermic reaction at a temperature of 100 °C or higher.

In order to overcome the above-described technical problem, a secondary battery according to the present invention includes an electrode assembly; a case accommodating the electrode assembly; a cap assembly electrically connected to the electrode assembly; a disk-shaped member positioned between the electrode assembly and the cap assembly; and a stick-shaped member vertically connected to the disk-shaped member and inserted into a winding core of the electrode assembly, wherein the disk-shaped member and the stick-shaped member include a fire extinguishing agent that causes an endothermic reaction at a temperature of 100 °C or higher.

### BRIEF DESCRIPTION OF THE DRAWINGS

The drawings attached to this specification illustrate exemplary embodiments of the present invention and along with the following detailed description of the invention, serve to help understand the technical idea of the present invention. Therefore, the present invention should not be construed as limited to the matters described in the drawings, in which:
FIG. 1 is a perspective view schematically illustrating the configuration of a fire extinguishing agent structure according to an embodiment of the present invention;
FIG. 2 is a cross-sectional view schematically illustrating the configuration of a fire extinguishing agent structure according to an embodiment of the present invention;
FIG. 3 is a plan view schematically illustrating the configuration of a fire extinguishing agent structure according to an embodiment of the present invention;
FIG. 4 is a perspective view schematically illustrating the configuration of a secondary battery according to an embodiment of the present invention;
FIG. 5 is a cross-sectional view schematically illustrating the configuration of a secondary battery according to an embodiment of the present invention;
FIG. 6 is a perspective view schematically illustrating the configuration of a battery pack according to an embodiment of the present invention; and
FIG. 7 is a plan view schematically illustrating the configuration of a battery pack according to an embodiment of the present invention.

### DETAILED DESCRIPTION OF EXEMPLARY EMBODIMENTS

Hereinafter, preferred embodiments of the present invention will be described in detail with reference to the attached drawings. Prior to this, terms or words used in this specification and claims should not be construed as limited to their conventional or dictionary meanings but should be construed as a meaning and concept consistent with the technical idea of the present invention based on the principle that the inventors can properly define the concept of terms in order to describe their invention in the best way. Therefore, the embodiments described in this specification and the configurations shown in the drawings are only some of the most preferred embodiments of the present invention and do not represent the entire technical idea of the present invention, and thus it should be understood that there may be various equivalents and modifications that can replace them at the time of filing this application.

**In** addition, when used herein, the term "comprise or include" and/or "comprising or including" specify the presence of the mentioned shapes, numbers, steps, operations, members, elements and/or groups thereof, and do not exclude the presence or addition of one or more other shapes, numbers, operations, members, elements and/or groups.

In order to help understand the invention, the attached drawings are not drawn to scale, and the dimensions of some components may be exaggerated. In addition, the same reference numbers may be assigned to the same components in different embodiments.

The statement that two objects for comparison are "the same" means that the two are "substantially the same." Therefore, "substantially the same" may include a deviation that is considered low in the art, for example, a deviation of less than 5%. Additionally, uniformity of a parameter in a certain area may be the uniformity from an average perspective.

Although the terms "first," "second," etc. are used to describe various components, these components are not limited thereto. These terms are used to distinguish one component from another component, and unless specifically stated to the contrary, a first component may be a second component.

Throughout the specification, unless otherwise stated, each component may be singular or plural.

When any component is said to be disposed on the "upper surface (or lower surface)" of a component or "on (or under)" a component, this not only means that any component is disposed in contact with the upper (or lower) surface of the component, but also means that other components may be interposed between the component and any component disposed on (or under) the component.

When a component is described as being "on," "connected to," or "coupled to" another component, the components may be directly connected or linked to each other, but it should be understood that other components may be "interposed" between each component, or that each component may be "connected," "coupled," or "linked" through other components.

As used herein, the term "and/or" includes any and all combinations of one or more of the associated listed items. Also, when describing embodiments of this disclosure, the use of "may" refers to "one or more embodiments of this disclosure." Phrases such as "one or more" and "at least one" before a list of elements modify the entire list of elements and do not modify the individual elements of the list.

In the specification, "A and/or B" means A, B, or A and B, unless specifically stated to the contrary, and "C to D" means C or more and D or less, unless specifically stated to the contrary.

When phrases such as "at least one of A, B, and C," "at least one of A, B, or C," "at least one selected from the group of A, B, and C," or "at least one selected from A, B, and C" are used to specify a list of elements A, B, and C, the phrase can refer to any and all suitable combinations.

The term "use" can be considered synonymous with the term "utilize." As used herein, terms such as "substantially" and "about" and similar terms are used as terms of approximation rather than terms of degree, and are intended to account for the inherent variations in measured or calculated values that would be recognized by those of ordinary skill in the art.

In this specification, terms such as "first," "second," "third," etc. may be used to describe various elements, components, regions, layers, and/or sections. However, these elements, components, regions, layers, and/or sections should not be limited thereto. These terms are used to distinguish one element, component, region, layer, or section from another element, component, region, layer, or section. Therefore, a first element, component, region, layer, or section discussed below may be called a second element, component, region, layer, or section without departing from the teachings of the exemplary embodiments.

Spatial relative terms such as "beneath," "below," "lower," "above," "upper," etc. may be used herein to explain the relationship between one element or feature and another element(s) or feature(s) as illustrated in the drawings for ease of description. It should be understood that the spatially relative positions are intended to encompass different orientations of the device in use or operation, in addition to the orientations described in the figures. For example, when the device in the drawing is turned over, elements described as "below" or "beneath" other elements would be oriented "above" or "on" the other elements. Thus, the term "below" may encompass both above and below directions.

The terms used in this specification are for describing embodiments of the present disclosure and are not intended to limit the present disclosure.

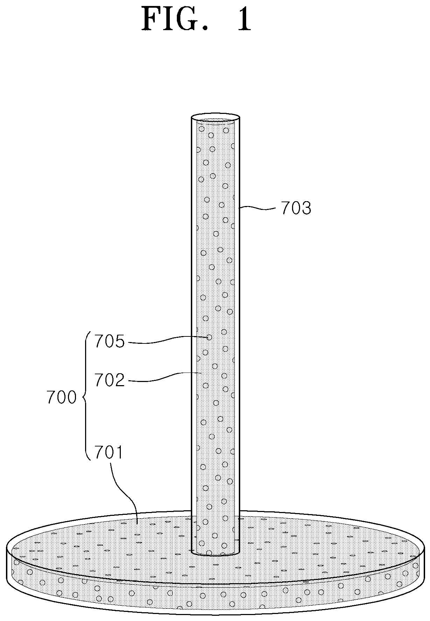

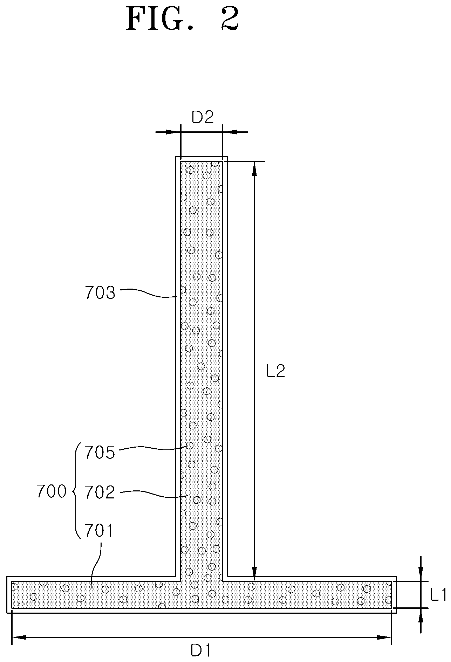

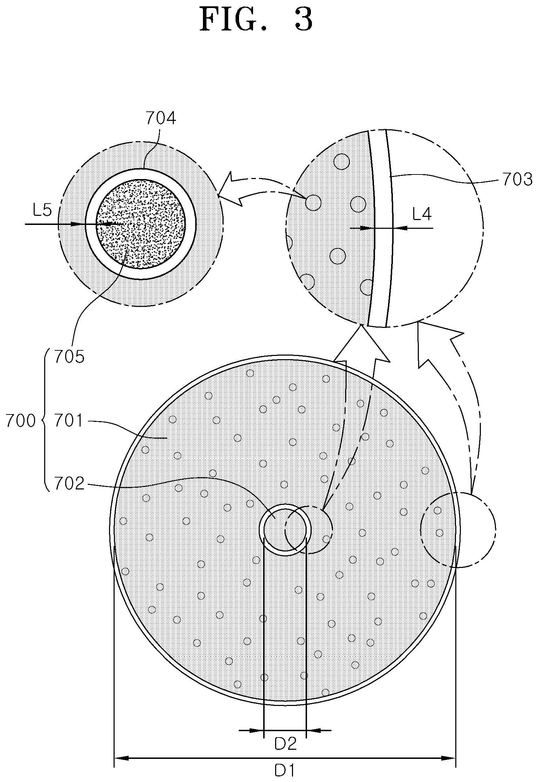

FIG. 1 is a perspective view schematically illustrating the configuration of a fire extinguishing agent structure according to an embodiment of the present invention, FIG. 2 is a cross-sectional view schematically illustrating the configuration of a fire extinguishing agent structure according to an embodiment of the present invention, and FIG. 3 is a plan view schematically illustrating the configuration of a fire extinguishing agent structure according to an embodiment of the present invention.

Referring to FIGS. 1 to 3, a fire extinguishing agent structure 700 according to the present embodiment includes a disk-shaped member 701, a stick-shaped member 702, and a fire extinguishing agent 705.

When the internal temperature of the battery rises due to internal short circuits, overcharging, exposure to high temperatures, or Joule's heating, secondary batteries can undergo a self-heating reaction in which heat generation is rapidly accelerated upon reaching a certain temperature. When a chain reaction accelerating the self-heating reaction progresses, the internal temperature of the battery rises rapidly, exceeding the critical point of thermal runaway, and thus an explosion or fire may occur. When the fire extinguishing agent 705 is contained in microcapsules 704, it is easy to cool the internal temperature of the cell near the critical point of thermal runaway, which may be advantageous in preventing thermal runaway. In other words, it helps reduce chain reactions at high temperatures by lowering the peak of self-heating, and high stability and reliability may be achieved by preventing the critical point of thermal runaway from being exceeded.

The fire extinguishing agent 705 causes an endothermic reaction at a temperature of 100 °C or higher. In a specific example, the internal temperature of the battery may be lowered through a material that undergoes phase transformation based on the critical temperature. Alternatively, in a specific example, a gas that can extinguish a fire may be generated through thermal decomposition at a temperature of 100 °C to 150 °C, for example, 100 °C to 130°C.

The fire extinguishing agent 705 may be one or more selected from the group consisting of sodium bicarbonate (NaHCO₃), potassium bicarbonate (KHCO₃), manganese carbonate (MnCO₃), and ammonium dihydrogen phosphate (NH₄H₂PO₄), but is not limited thereto.

The sodium bicarbonate (NaHCO₃) and potassium bicarbonate (KHCO₃) may undergo an endothermic reaction during high-temperature decomposition, in which they change to anhydrous sodium carbonate (Na₂CO₃) and anhydrous potassium carbonate (K₂CO₃), respectively. At this time, carbon dioxide (CO₂) and water (H₂O) may be generated to lower the cell temperature, and it is possible to suffocate a fire in an excellent manner by blocking the supply of oxygen. The manganese carbonate (MnCO₃) generates an inert gas when it changes to manganese (II) oxide (MnO) during high-temperature decomposition. For example, it is possible to suffocate a fire in an excellent manner by generating carbon dioxide. The ammonium dihydrogen phosphate (NH₄H₂PO₄) changes to phosphoric acid (H₃PO₄) during thermal decomposition, causing an endothermic reaction that may cool combustible materials, and generates phosphoric acid compounds to remove flammable substances.

The fire extinguishing agent 705 may be a powder, liquid, or gas material. In a specific example, when the internal temperature of the battery is high, the powder material changes into a liquid while reaching its melting point, thereby causing an endothermic reaction and lowering the temperature. Alternatively, it may be discharged in powder form to inhibit or delay the thermal runaway reaction of the cell. In a specific example, when the internal temperature of the battery is high, the liquid material changes into gas and causes an endothermic reaction, thereby lowering the temperature. In a specific example, the gas phase material may reduce the concentration of combustible gases, thereby reducing the chain reaction of self-heating.

In a specific example, the fire extinguishing agent 705 may be contained in microcapsules 704.

The microcapsule 704 according to the present embodiment may melt at a temperature of 100 °C or higher and discharge the fire extinguishing agent 705 contained therein. When the internal temperature of the battery is high, the shell of the microcapsule 704 is destroyed, and thus the fire extinguishing agent 705 is discharged, thereby reducing the risk of ignition or explosion of the battery.

A method of manufacturing the microcapsule 704 is not particularly limited as long as it is a method of manufacturing capsules containing the fire extinguishing agent 705. In a specific example, there is a microencapsulation method that includes mixing a phase change material and a material that can be used as the capsule shell, emulsifying the mixture, forming capsules by having the capsule shell surround the phase change material dispersed as liquid droplets and curing, and drying the capsules. Alternatively, there is an encapsulation method of forming a core-shell structure through emulsification or polymerization reactions of core and shell materials.

The diameter (D3) of the microcapsule 704 may be 10 µm to 30 µm. In a specific example, the diameter (D3) may be 12 µm to 28 µm, for example, 15 µm to 25 µm. Within this range, since the microcapsule 704 has a large surface area, it is possible to detect temperature changes quickly and significantly, increase the efficiency of the endothermic reaction of the fire extinguishing agent 705, and help prevent thermal runaway. The diameter may be measured by laser diffraction (LD). The method may be performed according to ISO 13320:2020.

The microcapsule 704 may have a shell thickness (L5) of 0.5 µm to 10 µm. In a specific example, the thickness (L5) may be 1 µm to 9 µm, for example, 2 µm to 8 µm. Within this range, it is easy to melt the microcapsule, which may be advantageous in preventing thermal runaway.

The shell material of the microcapsule 704 may include materials that are advantageous for containing and sealing the fire extinguishing agent 705, do not react with the fire extinguishing agent 705, and may easily melt at high temperatures. In a specific example, the shell material may be one or more selected from the group consisting of epoxy, silicone, acrylate, and polyurea and polyurethane based on polyisocyanate prepolymers, but is not limited thereto.

The disk-shaped member 701 according to the present embodiment includes the fire extinguishing agent 705 and may be seated between an electrode assembly and a cap assembly.

The disk-shaped member 701 may have a diameter (D1) of 30 mm to 45 mm. In a specific example, the diameter (D1) may be 32 mm to 43 mm, for example, 35 mm to 42 mm. Within this range, the efficiency of the endothermic reaction of the fire extinguishing agent 705 may be increased, and it may be advantageous in preventing thermal runaway.

The disk-shaped member 701 may have a thickness (L1) of 1.0 mm to 5.0 mm. In a specific example, the thickness (L1) may be 1.2 mm to 4.8 mm, for example, 2.0 mm to 4.0 mm. Within this range, the efficiency of the endothermic reaction of the fire extinguishing agent 705 may be increased, and it may be advantageous in preventing thermal runaway.

The stick-shaped member 702 according to the present embodiment is vertically coupled to the disk-shaped member 701. The stick-shaped member 702 may be inserted into the winding core of the electrode assembly.

The stick-shaped member 702 may have a diameter (D2) of 3 mm to 6 mm. In a specific example, the diameter (D2) may be 3.5 mm to 5.2 mm, for example, 4.0 mm to 4.8 mm. Within this range, the efficiency of the endothermic reaction of the fire extinguishing agent may be increased, and it may be advantageous in preventing thermal runaway.

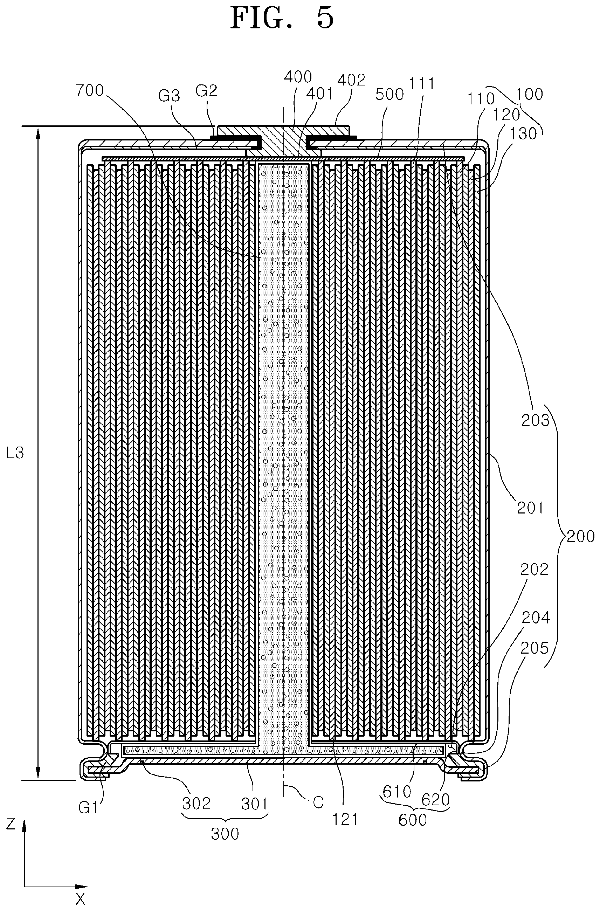

The length (L2) of the stick-shaped member 702 may be 0.55 to 0.96 with respect to the overall battery height (L3). Referring to FIG. 5, the overall battery height (L3) may be defined as the distance from a second terminal surface 402 of a terminal 400 to the bottom surface of the crimping portion 205. In a specific example, the length (L2) of the stick-shaped member 702 relative to the overall battery height (L3) may be 0.6 to 0.95, for example, 0.7 to 0.95. Within this range, the efficiency of the endothermic reaction of the fire extinguishing agent may be increased, and it may be advantageous in preventing thermal runaway.

The disk-shaped member 701 and the stick-shaped member 702 may be integrally formed. The fire extinguishing agent structure 700 formed as an integrated component has higher strength and durability against external impacts, and may have a simplified structure.

The disk-shaped member 701 and the stick-shaped member 702 may include a polymeric cover member 703. The polymeric cover member 703 melts or ruptures at a temperature of 100 °C or higher, thereby releasing the fire extinguishing agent 705 contained in a plurality of microcapsules 704 and preventing thermal runaway.

The polymeric cover member 703 may have a thickness (L4) of 50 µm to 100 µm. In a specific example, the thickness (L4) may be 60 µm to 90 µm, for example, 70 µm to 85 µm. Within this range, it is easy to melt or rupture the polymeric cover member 703, which may be advantageous in preventing thermal runaway.

The material of the polymeric cover member 703 is advantageous in accommodating and sealing a plurality of microcapsules 704 and may include a material that may easily melt or rupture at a temperature of 100 °C or higher. In a specific example, it may be one or more selected from the group consisting of polyethylene (PE), polypropylene (PP), polyimide (PI), polyethylene terephthalate (PET), epoxy, acetal, indium, and polyurea and polyurethane based on polyisocyanate prepolymers, but is not limited thereto.

The disk-shaped member 701 and the stick-shaped member 702 may be filled with a plurality of microcapsules 704 containing the fire extinguishing agent. The plurality of microcapsules may be compression-molded into a pellet in the shape of a disk or stick, and inserted into the secondary battery without the polymeric cover member. The pellet melts or ruptures at a temperature of 100 °C or higher, thereby releasing the fire extinguishing agent 705 contained in the plurality of microcapsules 704 and preventing thermal runaway.

The volume of the plurality of microcapsules 704 may be 60% to 90% of the total volume of the fire extinguishing agent structure 700. In a specific example, the volume may be 65% to 85%, for example, 70% to 80%. Within this range, the efficiency of the endothermic reaction of the fire extinguishing agent may be increased, and it may be advantageous in preventing thermal runaway.

The disk-shaped member 701 and the stick-shaped member 702 may be formed from a composition including a plurality of microcapsules and a binder.

**In** a specific example, the plurality of microcapsules 704 are dispersed in a binder.

The binder may be one or more selected from the group consisting of polyvinylidene fluoride, styrene-butadiene rubber, acrylated styrene-butadiene rubber, acrylonitrile-butadiene rubber, acrylonitrile-butadiene-styrene rubber, acrylic rubber, butyl rubber, a fluoroelastomer, polytetrafluoroethylene, polyethylene, polypropylene, an ethylene-propylene copolymer, polyethylene oxide, polyvinyl pyrrolidone, polyepichlorohydrin, polyphosphazene, polyacrylonitrile, polystyrene, an ethylene-propylene-diene copolymer, polyvinyl pyridine, chlorosulfonated polyethylene, latex, a polyester resin, an acrylic resin, a phenolic resin, an epoxy resin, polyvinyl alcohol, hydroxypropyl methylcellulose, hydroxypropyl cellulose, and diacetyl cellulose, but it is not limited thereto.

The binder may be included in an amount of 50 parts by weight to 80 parts by weight based on 100 parts by weight of the microcapsules. In a specific example, the binder may be included in an amount of 60 parts by weight to 80 parts by weight, for example, 60 parts by weight to 75 parts by weight. Within this range, the efficiency of the endothermic reaction of the fire extinguishing agent may be increased, and it may be advantageous in preventing thermal runaway.

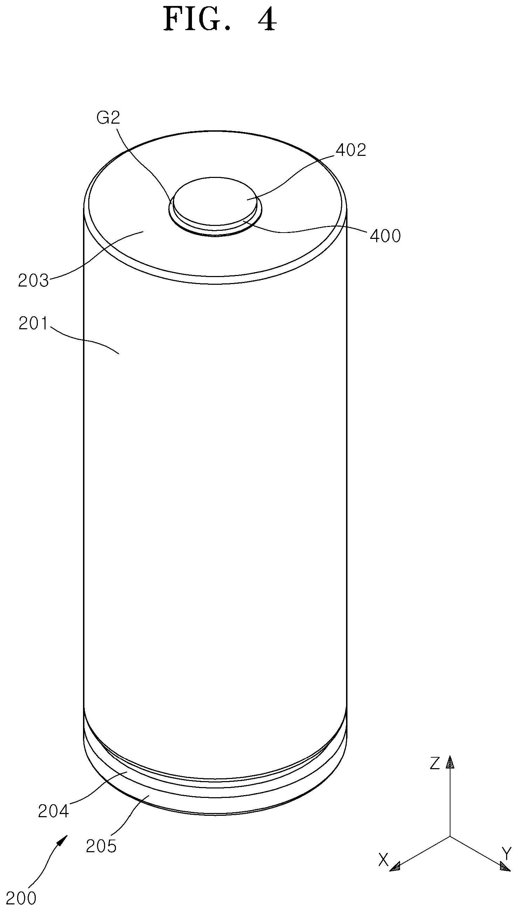

FIG. 4 is a perspective view schematically illustrating the configuration of a secondary battery according to an embodiment of the present invention, and FIG. 5 is a cross-sectional view schematically illustrating the configuration of a secondary battery according to an embodiment of the present invention.

Referring to FIGS. 4 and 5, a secondary battery 2 according to the present embodiment includes an electrode assembly 100, a case 200, a cap assembly 300, a terminal 400, a first current collector 500, and a fire extinguishing agent structure 700.

Hereinafter, the secondary battery will be described as a cylindrical lithium-ion secondary battery. However, the present invention is not limited thereto, and the secondary battery may be a lithium polymer battery or a prismatic battery.

The electrode assembly 100 according to the present embodiment may serve as a unit structure that performs the power charging and discharging operations of the secondary battery.

The electrode assembly 100 may include a first electrode plate 110, a second electrode plate 120, and a separator 130 disposed between the first electrode plate 110 and the second electrode plate 120.

The electrode assembly 100 may have a shape that is wound around a winding axis C.

More specifically, the electrode assembly 100 may have a shape in which the first electrode plate 110, separator 130, and second electrode plate 120 are stacked and wound around the winding axis C in a clockwise or counterclockwise direction. Accordingly, the electrode assembly 100 may have an approximate jelly roll shape. The cross-sectional shape of the electrode assembly 100 may be changed to various shapes such as oval, polygonal, and the like, in addition to circular. Here, the winding axis C may refer to a straight line passing through the center of the electrode assembly 100.

The first electrode plate 110 may serve as a positive electrode of the electrode assembly 100. The first electrode plate 110 may be formed to have the form of a foil that includes a metal material such as aluminum or an aluminum alloy. The first electrode plate 110 is not particularly limited in terms of its type, size, and shape, as long as it has conductivity without causing chemical changes in the secondary battery.

A first active material layer may be applied to at least a portion of the first electrode plate 110. The first active material layer may be applied to both sides of the first electrode plate 110, or applied to only one side of the first electrode plate 110.

Since the first electrode plate 110 serves as a positive electrode, the first active material layer may include a positive electrode active material.

A compound capable of reversible intercalation and deintercalation of lithium (lithiated intercalation compound) may be used as a positive electrode active material. Specifically, one or more types of composite oxides of lithium and a metal selected from cobalt, manganese, nickel, iron, and a combination thereof may be used.

For example, the positive electrode active material may include at least one of lithium iron phosphate oxide (LiFePO₄, LFP), lithium manganese iron phosphate oxide (LiMnFePO₄, LMFP), and lithium nickel cobalt manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium iron phosphate oxide (LiFePO₄, LFP), lithium manganese iron phosphate oxide (LiMnFePO₄, LMFP), or lithium nickel cobalt manganese oxide (LiNiₓCo_{y}Mn_{z}O₂, NCM), or may include two thereof or all of them.

The first active material layer may further include a positive electrode conductive material.

The positive electrode conductive material is used to impart conductivity to the first active material layer, and any material may be used as long as it does not cause chemical changes and is electronically conductive. Examples of positive electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, or a mixture thereof.

The first active material layer may further include a positive electrode binder.

The positive electrode binder serves to adhere the particles constituting the positive electrode active material to each other well and also to adhere the positive electrode active material to the first electrode plate 110 well.

The positive electrode binder may be, for example, a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the positive electrode binder, it may further include a cellulose-based compound capable of imparting viscosity. As the cellulose-based compound, a mixture of one or more of carboxymethyl cellulose, hydroxypropylmethyl cellulose, methyl cellulose, or alkali metal salts thereof may be used. As the alkali metal, Na, K, or Li may be used.

The dry binder is a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

The first electrode plate 110 may include a first uncoated portion 111 where the first active material layer is not applied. The first uncoated portion 111 may protrude a predetermined distance from one end of the electrode assembly 100 along the winding axis C.

The second electrode plate 120 may serve as a negative electrode of the electrode assembly 100. The second electrode plate 120 may be formed to have the form of a foil that includes a metal material such as copper, a copper alloy, nickel, or a nickel alloy. The second electrode plate 120 may be disposed to face the first electrode plate 110 at a predetermined distance.

The second electrode plate 120 is not particularly limited in terms of its type, size, and shape, as long as it has conductivity without causing chemical changes in the secondary battery.

A second active material layer may be applied to at least a portion of the second electrode plate 120. The second active material layer may be applied to both sides of the second electrode plate 120, or applied to only one side of the second electrode plate 120.

Since the second electrode plate 120 serves as a negative electrode, the second active material layer may include a negative electrode active material.

The negative electrode active material may include a material capable of reversibly intercalating/deintercalating lithium ions, lithium metal, an alloy of lithium and a metal and a material capable of doing and dedoping lithium, or a transition metal oxide.

The material capable of reversibly intercalating/deintercalating lithium ions is a carbon-based negative electrode active material and may include, for example, crystalline carbon, amorphous carbon, or a combination thereof. Examples of the crystalline carbon may include graphite such as amorphous, platy, flaky, spherical, or fibrous natural graphite or artificial graphite, and examples of the amorphous carbon may include soft carbon, hard carbon, mesophase pitch carbide, calcined coke, and so on.

The alloy of lithium and a metal may be an alloy of lithium and a metal selected from Na, K, Rb, Cs, Fr, Be, Mg, Ca, Sr, Si, Sb, Pb, In, Zn, Ba, Ra, Ge, Al, and Sn.

An Si-based negative electrode active material or an Sn-based negative electrode active material may be used as the material capable of doping and dedoping lithium. The Si-based negative electrode active material may be silicon, a silicon-carbon composite, SiOₓ (0<x<2), an Si-Q alloy (where Q is selected from an alkali metal, an alkaline earth metal, a group 13 element, a group 14 element (excluding Si), a group 15 element, a group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the silicon-carbon composite may include a secondary particle (core) in which silicon primary particles are assembled and an amorphous carbon coating layer (shell) located on the surface of the secondary particle. The amorphous carbon may also be located between the silicon primary particles, and the silicon primary particles may be, for example, coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles and an amorphous carbon coating layer located on the surface of the core.

The Si-based negative electrode active material or Sn-based negative electrode active material may be used in combination with a carbon-based negative electrode active material.

The second active material layer may further include a negative electrode conductive material and a negative electrode binder.

The negative electrode conductive material is used to impart conductivity to the second active material layer, and any material may be used as long as it does not cause chemical changes and is electronically conductive. Examples of negative electrode conductive materials may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives, or a mixture thereof.

The negative electrode binder serves to adhere the particles constituting the negative electrode active material to each other well and also to adhere the negative electrode active material to the second electrode plate 120 well.

The negative electrode binder may be, for example, a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, it may further include a cellulose-based compound capable of imparting viscosity. As the cellulose-based compound, a mixture of one or more of carboxymethyl cellulose, hydroxypropylmethyl cellulose, methyl cellulose, or alkali metal salts thereof may be used. As the alkali metal, Na, K, or Li may be used.

The dry binder is a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

The second electrode plate 120 may include a second uncoated portion 121 where the second active material layer is not applied. The second uncoated portion 121 may protrude a predetermined distance from the other end of the electrode assembly 100 located on the opposite side of the first uncoated portion 111 along the winding axis C.

A separator 130 may be disposed between the first electrode plate 110 and the second electrode plate 120. The separator 130 may allow the movement of lithium ions between the first electrode plate 110 and the second electrode plate 120 while preventing a short circuit between the first electrode plate 110 and the second electrode plate 120.

As the separator 130, polyethylene, polypropylene, polyvinylidene fluoride, or a multilayer film of two or more layers thereof may be used, and mixed multilayer films such as a polyethylene/polypropylene two-layer separator, a polyethylene/polypropylene/polyethylene three-layer separator, a polypropylene/polyethylene/polypropylene three-layer separator, etc. may be used.

The separator 130 may include a porous substrate and a coating layer including an organic material, an inorganic material, or a combination thereof located on one or both sides of the porous substrate.

The porous substrate may be a polymer film formed of one polymer selected from polyolefins such as polyethylene, polypropylene, etc., polyesters such as polyethylene terephthalate, polybutylene terephthalate, etc., polyacetal, polyamide, polyimide, polycarbonate, polyetherketone, polyaryletherketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but is not limited thereto.

The organic material and the inorganic material may be present as a mixture in one coating layer or in a form in which a coating layer including an organic material and a coating layer including an inorganic material are stacked.

The separator 130 may be provided as a pair. A pair of separators 130 may be disposed to face both sides of the first electrode plate 110 or the second electrode plate 120, respectively. The pair of separators 130 may be wound together with the first electrode plate 110 and the second electrode plate 120 around the winding axis C.

The case 200 according to the present embodiment may form the general outer shape of the secondary battery 2 and accommodate the electrode assembly 100. The case 200 may be configured to be electrically conductive. For example, the case 200 may include at least one material of steel, stainless steel, aluminum, and an aluminum alloy.

The case 200 may include a can 201, an open portion 202, and a sealing portion 203.

The can 201 according to the present embodiment may be formed to have a cylindrical shape with an approximate circular cross-section. The diameter of the can 201 may be larger than the diameter of the electrode assembly 100. The length of the can 201 parallel to the winding axis C of the electrode assembly 100 may be greater than the length of the electrode assembly 100.

The electrode assembly 100 may be accommodated in the can 201. The central axis of the can 201 may be disposed to be coaxial with the winding axis C of the electrode assembly 100.

The open portion 202 and the sealing portion 203 may be disposed at each end of the can 201. The open portion 202 and the sealing portion 203 may be spaced apart from each other along a first direction. The first direction described below may refer to the direction parallel to the central axis of the can 201 and the winding axis C of the electrode assembly 100, specifically the direction from the open portion 202 toward the sealing portion 203 (z-axis direction) based on FIG. 5.

The open portion 202 according to the present embodiment may be formed to have the shape of a hole passing through one end of the can 201. Both sides of the open portion 202 may be connected to the space inside and outside the can 201, respectively. During the manufacturing process of the secondary battery 2, the electrode assembly 100 may be inserted into the can 201 through the open portion 202 along with the electrolyte.

The sealing portion 203 according to the present embodiment may be formed to have the shape of a circular plate disposed at the other end of the can 201 spaced apart from the open portion 202 along the first direction. The outer surface of the sealing portion 203 may be integrally formed with the inner surface of the can 201 to seal the other end of the can 201. For example, the can 201 and the sealing portion 203 may be formed by a deep drawing process. Alternatively, the sealing portion 203 may be manufactured separately from the can 201, and its outer surface may be joined to the inner surface of the can 201. A through-hole may be formed in the center of the sealing portion 203 to provide a path for inserting the terminal 400, which will be described later.

The first uncoated portion 111 of the electrode assembly 100 may be disposed in the can 201 to face the sealing portion 203. The second uncoated portion 121 of the electrode assembly 100 may be disposed in the can 201 to face the open portion 202.

A case gasket G3 that electrically insulates the electrode assembly 100 from the sealing portion 203 may be disposed between the electrode assembly 100 and the sealing portion 203. The case gasket G3 may serve as a component that electrically insulates the electrode assembly 100 from the sealing portion 203 by preventing direct contact between the case 200 and the first electrode plate 110.

The case gasket G3 according to the present embodiment may be disposed between one side of the electrode assembly 100 where the first uncoated portion 111 protrudes and the inner surface of the sealing portion 203 that faces the internal space of the can 201. The case gasket G3 may be fixed to the inner surface of the sealing portion 203 using an adhesive and the like. The case gasket G3 may be composed of an insulating material such as rubber, polyethylene (PE), polypropylene (PP), polyethylene terephthalate (PET), and the like.

The case 200 according to the present embodiment may further include a beading portion 204.

The beading portion 204 may refer to a portion of the can 201 that protrudes from the inner surface of the can 201 toward the central axis of the can 201, among the entire area of the can 201. The beading portion 204 may be formed by pressing the outer circumference of the can 201 adjacent to the open portion 202. The beading portion 204 may come into contact with the other end of the electrode assembly 100 where the second uncoated portion 121 protrudes. Accordingly, the beading portion 204 may prevent the electrode assembly 100 from moving in the can 201 or being separated from the can 201.

The cap assembly 300 according to the present embodiment may include a cap plate 301.

The cap plate 301 may be configured to seal the open portion 202 of the case 200.

The cap plate 301 according to the present embodiment may be formed to have an approximate circular plate shape. The cap plate 301 may be disposed in the can 201. The cap plate 301 may be disposed in the can 201 to face the other end of the electrode assembly 100 with the beading portion 204 therebetween. One side of the cap plate 301 may be seated on the beading portion 204. The other side of the cap plate 301 may be disposed to face the space outside the can 201.

A crimping portion 205 for fixing the cap plate 301 may be formed at one end of the can 201 where the open portion 202 is formed. The crimping portion 205 according to the present embodiment may be bent from one end of the can 201 and disposed to face the other side of the cap plate 301 that is disposed to face the space outside the can 201.

A cap gasket G1 that electrically insulates the cap plate 301 from the case 200 may be disposed between the cap plate 301 and the crimping portion 205.

The cap gasket G1 according to the present embodiment may be disposed to completely surround the end of the cap plate 301. The outer surface of the cap gasket G1 may be pressed and fixed to the inner surfaces of the beading portion 204 and the crimping portion 205. The cap gasket G1 may be composed of an insulating material such as rubber, polyethylene (PE), polypropylene (PP), polyethylene terephthalate (PET), and the like. Accordingly, the cap gasket G1 may electrically insulate the cap plate 301 from the case 200 and prevent moisture, foreign substances, etc. from entering between the cap plate 301 and the case 200.

The crimping portion 205 may be disposed to face the other side of the cap plate 301 with the cap gasket G1 therebetween, and may come into contact with the cap gasket G1 to press the cap plate 301 toward the beading portion 204. Accordingly, the cap plate 301 may be stably fixed at the open portion 202 side of the case 200.

The cap plate 301 may be composed of a metal material to ensure mechanical rigidity, or alternatively, may be composed of a non-electrically conductive synthetic resin material.

The cap assembly 300 according to the present embodiment may be provided with a vent 302 that opens the cap plate 301 when the internal pressure of the case 200 exceeds a set pressure.

The vent 302 according to the present embodiment may be thinner than other areas of the cap plate 301. For example, the vent 302 may have a notch form that is concavely formed from one side of the cap plate 301 toward the other side. The vent 302 may be spaced apart from the center of the cap plate 301 and have a ring shape that is concentric with the cap plate 301. As another example, the vent 302 may have at least one pattern with a straight or curved shape.

The terminal 400 is coupled to the case 200 and may be electrically connected to the electrode assembly 100 via the first current collector 500, which will be described later. The terminal 400 may be composed of an electrically conductive metal material, such as aluminum, nickel, and copper.

In the present embodiment, since the terminal 400 is electrically connected to the first electrode plate 110 of the electrode assembly 100 via the first current collector 500, it may serve as a positive electrode terminal of the secondary battery 2. However, the terminal 400 is not limited thereto and may serve as a negative electrode terminal by being electrically connected to the second electrode plate 120.

The terminal 400 according to the present embodiment may pass through the sealing portion 203 of the case 200 along the first direction. More specifically, the terminal 400 may be inserted into the through-hole formed in the center of the sealing portion 203. The outer surface of the terminal 400 may be spaced a predetermined distance apart from the inner surface of the through-hole formed in the center of the sealing portion 203. Both ends of the terminal 400 may be respectively disposed in the space inside and outside the can 201.

The both ends of the terminal 400 disposed in the space inside and outside the can 201 may be compressed and deformed by riveting and disposed to face the outer and inner surfaces of the sealing portion 203, respectively. Accordingly, the edge area of the terminal 400 may have a cross-sectional shape that is approximately U-shaped. As a result, the terminal 400 may be stably fixed to the case 200 while passing through the sealing portion 203.

On one side of the terminal 400 located in the can 201, a first terminal surface 401 facing the electrode assembly 100 along the first direction may be formed. The first terminal surface 401 according to the present embodiment may have a planar shape disposed perpendicular to the first direction.

On the other side of the terminal 400 located outside the can 201, a second terminal surface 402 spaced apart from the first terminal surface 401 along the first direction may be formed. The second terminal surface 402 according to the present embodiment may have a planar shape that faces the space outside the can 201 and is parallel to the first terminal surface 401. The terminal 400 may have a structure with different cross-sectional areas on both sides based on the sealing portion 203.

A terminal gasket G2 that electrically insulates the terminal 400 from the case 200 may be disposed between the terminal 400 and the case 200.

The terminal gasket G2 according to the present embodiment may be disposed to completely surround the inner surface of the through-hole formed in the sealing portion 203 and the outer surface of the sealing portion 203 facing both ends of the terminal 400. Both surfaces of the terminal gasket G2 may be in close contact with the surfaces of the sealing portion 203 and the terminal 400. The terminal gasket G2 may be composed of an insulating material such as rubber, polyethylene (PE), polypropylene (PP), polyethylene terephthalate (PET), and the like.

The first current collector 500 may be disposed between the electrode assembly 100 and the first terminal surface 401, and may be connected to the electrode assembly 100. The first current collector 500 may be composed of an electrically conductive metal material such as aluminum, nickel, copper, and the like.

The first current collector 500 may be disposed between one side of the electrode assembly 100 where the first uncoated portion 111 protrudes and the first terminal surface 401. The first current collector 500 may be connected to the first terminal surface 401 and the first uncoated portion 111. Accordingly, the first current collector 500 may serve to electrically connect the electrode assembly 100 and the terminal 400. In the present embodiment, the first current collector 500 may serve as a positive electrode current collector.

The secondary battery 2 according to the present embodiment may further include a second current collector 600.

The second current collector 600 may be disposed between the electrode assembly 100 and the cap plate 301, and may be connected to the electrode assembly 100. The second current collector 600 may be composed of an electrically conductive metal material such as aluminum, nickel, copper, and the like.

The second current collector 600 according to the present embodiment may include a flat portion 610 that faces the other side of the electrode assembly 100 where the second uncoated portion 121 protrudes, and an extending portion 620 that extends from the flat portion 610.

One side of the flat portion 610, which faces the other side of the electrode assembly 100, may be connected to the second uncoated portion 121. Accordingly, in the present embodiment, the second current collector 600 may serve as a negative electrode current collector. The end of the second uncoated portion 121 may be bent in a direction parallel to the flat portion 610 and may be connected to one side of the flat portion 610 by welding and the like. The bending direction of the second uncoated portion 121 may be directed toward the winding axis C of the electrode assembly 100.

The extending portion 620 may extend from the edge of the flat portion 610 toward the cap plate 301. The extending portion 620 may come into contact with the inner surface of the beading portion 204. The extending portion 620 may be rounded or bent along the beading portion 204. The extending portion 620 may be connected to the beading portion 204 by welding and the like. As a result, the case 200 and the second electrode plate 120 may be electrically connected, and the sealing portion 203 may serve as a negative electrode terminal.

A plurality of extending portions 620 may be formed. The plurality of extending portions 620 may be spaced apart from each other along the edge of the flat portion 610.

However, the secondary battery 2 according to the present embodiment is not limited thereto, and it is also possible for the second uncoated portion 121 of the electrode assembly 100 to be directly connected to the cap plate 301.

In the secondary battery 2 according to the present embodiment, after inserting the jelly roll of the electrode assembly 100 into the can 201, the terminal 400, the first current collector 500, and the second current collector 600 may be welded, and the fire extinguishing agent structure 700 may be mounted before forming the crimping portion 205. The disk-shaped member 701 of the fire extinguishing agent structure 700 may be seated between the electrode assembly 100 and the cap assembly 300, while the stick-shaped member 702 may be inserted into the winding core of the electrode assembly 100.

Hereinafter, battery packs according to various embodiments of the present invention will be described.

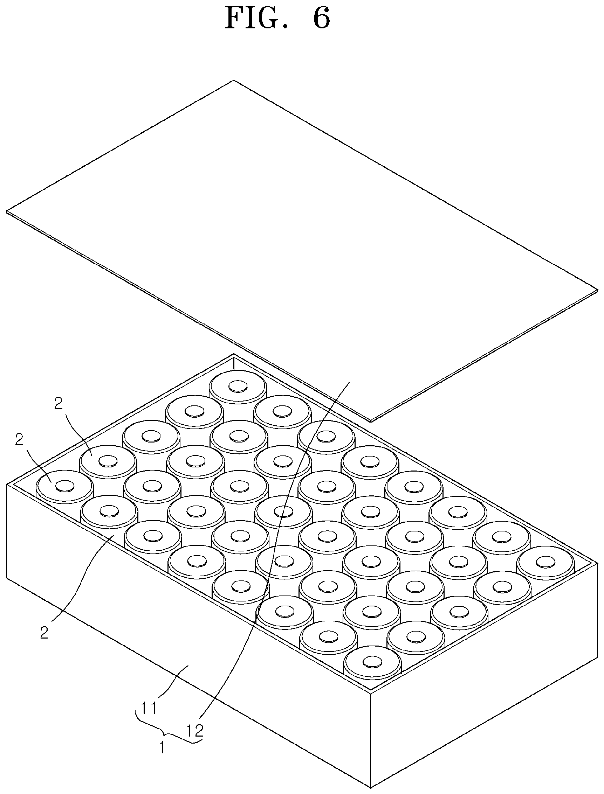

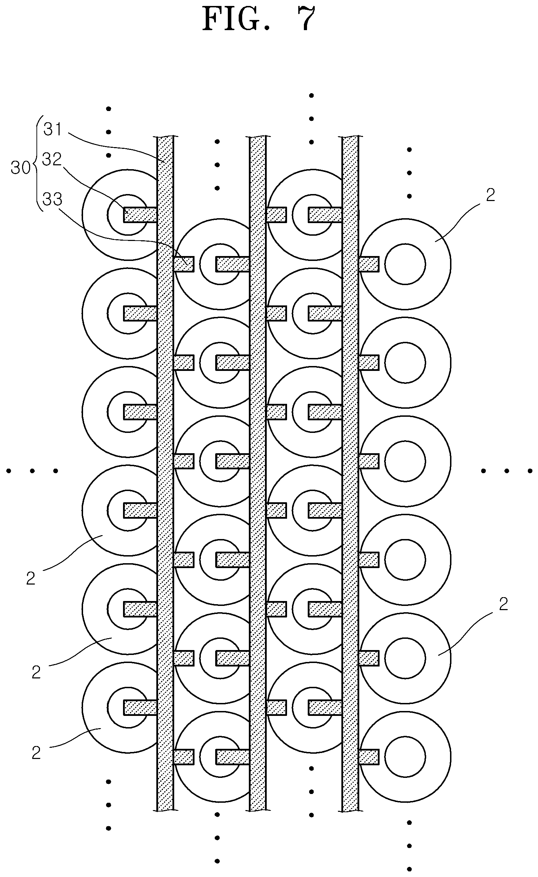

FIG. 6 is a perspective view schematically illustrating the configuration of a battery pack according to an embodiment of the present invention, and FIG. 7 is a plan view schematically illustrating the configuration of a battery pack according to an embodiment of the present invention.

Referring to FIGS. 6 and 7, the battery pack according to various embodiments may include a housing 1 and secondary batteries 2.

The housing 1 may form the general outer shape of the battery pack and provide a space for accommodating the secondary batteries 2.

The housing 1 according to the present embodiment may include a housing body 11 and a cover 12.

The housing body 11 may be formed as a box with one open side and an empty interior. The cross-sectional shape of the housing body 11 is not limited to the rectangular shape shown in FIG. 1 and may be designed in various shapes such as polygonal, circular, and oval shapes.

The cover 12 may be coupled to the housing body 11 and may seal the internal space of the housing body 11. For example, the cover 12 may have a plate-like shape and may be disposed to face the open side of the housing body 11. The cover 12 may be fixed to the housing body 11 by various joining methods such as bolting, welding, and fitting.

The secondary battery 2 may be disposed in the housing 1. The secondary battery 2 described below may be any one of the secondary batteries according to the embodiments described above.

A plurality of secondary batteries 2 may be provided. The plurality of secondary batteries 2 may be disposed in various patterns such as a lattice or zigzag in the housing 1. The plurality of secondary batteries 2 may be arranged side by side. The number of secondary batteries 2 may be designed in various ways depending on the size and shape of the housing 1.

According to the present invention, it is possible to increase the efficiency of the endothermic reaction of the fire extinguishing agent and prevent thermal runaway at high temperatures by including the fire extinguishing agent structure.

According to the present invention, it is possible to reduce the risk of ignition or explosion of the battery and improve stability.

However, the effects that can be achieved through the present invention are not limited to the above-described effects, and other technical effects not mentioned can be clearly understood by those skilled in the art from the above description of the invention.

The present invention has been described with reference to the embodiments illustrated in the drawings, but these embodiments are merely exemplary, and those skilled in the art to which the present invention pertains will understand that various modifications and equivalent other embodiments are possible therefrom.

Therefore, the scope of technical protection of the present invention should be determined by the scope of the claims below.

**<List of Reference Numerals>**

| | | | |
|---|---|---|---|
| 1: | Housing | 2: | Secondary battery |
| 11: | Housing body | 12: | Cover |
| 100: | Electrode assembly | 110: | First electrode plate |
| 111: | First uncoated portion | 120: | Second electrode plate |
| 121: | Second uncoated portion | 130: | Separator |
| 200: | Case | 201: | Can |
| 202: | Open portion | 203: | Sealing portion |
| 204: | Beading portion | 205: | Crimping portion |
| 300: | Cap assembly | 301: | Cap plate |
| 302: | Vent | 400: | Terminal |
| 401: | First terminal surface | 402: | Second terminal surface |
| 500: | First current collector | 600: | Second current collector |
| 700: | Fire extinguishing agent structure | 701: | Disk-shaped member |
| 702: | Stick-shaped member | 703: | Polymeric cover member |
| 704: | Microcapsule | 705: | Fire extinguishing agent |

## Claims

1. A fire extinguishing agent structure (700) comprising:
a disk-shaped member (701); and
a stick-shaped member (702) vertically connected to the disk-shaped member (701),
wherein the stick-shaped member (702) and the disk-shaped member (701) include a fire extinguishing agent (705) that causes an endothermic reaction at a temperature of 100 °C or higher.

2. The structure of claim 1, wherein the fire extinguishing agent (705) is contained in microcapsules (704).

3. The structure of claim 2, wherein the microcapsule (704) melts at a temperature of 100 °C or higher and releases the fire extinguishing agent (705) contained therein.

4. The structure of claim 2 or 3, wherein the microcapsule (704) has a diameter of 10 µm to 30 µm.

5. The structure of any one of the preceding claims, wherein the fire extinguishing agent (705) is one or more selected from the group consisting of sodium bicarbonate (NaHCO₃), potassium bicarbonate (KHCO₃), manganese carbonate (MnCO₃), and ammonium dihydrogen phosphate (NH₄H₂PO₄).

6. The structure of any one of the preceding claims, wherein the disk-shaped member (701) and the stick-shaped member (702) are integrally formed.

7. The structure of claim 1, wherein the disk-shaped member (701) and the stick-shaped member (702) are filled with a plurality of microcapsules (704) containing the fire extinguishing agent (705).

8. The structure of claim 1, wherein the disk-shaped member (701) and the stick-shaped member (702) are formed from a composition including a plurality of microcapsules (704) and a binder.

9. The structure of any one of the preceding claims, wherein the disk-shaped member (701) and the stick-shaped member (702) include a polymeric cover member (703) and a plurality of microcapsules (704) contained in the polymeric cover member (703), and the polymeric cover member (703) melts or ruptures at a temperature of 100 °C or higher.

10. The structure of any one of the preceding claims, wherein the disk-shaped member (701) has a diameter of 30 mm to 45 mm and a thickness of 1.0 mm to 5.0 mm.

11. The structure of any one of the preceding claims, wherein the stick-shaped member (702) has a diameter of 3 mm to 6 mm and a length of 0.55 to 0.96 with respect to the overall battery height.

12. A secondary battery (2) comprising the fire extinguishing agent structure (700) of any one of claims 1 to 11.

13. The secondary battery (2) of claim 12, wherein the disk-shaped member (701) is seated between an electrode assembly (100) and a cap assembly (300), and the stick-shaped member (702) is inserted into a winding core of the electrode assembly (100).
